# EUROPÄISCHE PATENTSCHRIFT

(11) **EP 3 635 376 B1**
(45) Veröffentlichungstag und Bekanntmachung des Hinweises auf die Patenterteilung: **23.06.2021**
(21) Anmeldenummer: 18755162.7
(22) Anmeldetag: 06.08.2018
(51) Int. Cl.: G01N 21/90, B65G 47/24, B65G 47/20

(54) **VORRICHTUNG UND VERFAHREN ZUM PRÜFEN VON HOHLKÖRPERN**
DEVICE AND METHOD FOR CHECKING HOLLOW BODIES
DISPOSITIF ET PROCÉDÉ DE VÉRIFICATION DE CORPS CREUX

(30) Priorität: 13.10.2017 DE 102017123888
(43) Veröffentlichungstag der Anmeldung: 15.04.2020
(73) Patentinhaber: INTRAVIS Gesellschaft für Lieferungen und Leistungen von bildgebenden und bildverarbeitenden Anlagen und Verfahren mbH, 52068 Aachen (DE)
(72) Erfinder: FUHRMANN, Gerd, 52066 Aachen (DE); SCHÖNHOFF, Klaus, 52146 Würselen (DE); RICK, Michael, 52064 Aachen (DE)
(74) Vertreter: Kohlmann, Kai
(86) Internationale Anmeldenummer: PCT/EP2018/071251
(87) Internationale Veröffentlichungsnummer: WO 2019/072436

(56) Entgegenhaltungen:
- EP-A1- 2 112 502
- WO-A1-01/25761
- DE-A1-102012 102 073
- US-A- 5 007 096
- US-A1- 2005 041 848

## Beschreibung

Die Erfindung betrifft eine Vorrichtung und ein Verfahren zum Prüfen von um eine Rotationsachse rotationssymmetrischen Hohlkörpern mit einer Mündung während des vereinzelten kontinuierlichen Überkopftransports der Hohlkörper in einer Förderrichtung entlang einer Förderstrecke.

Die Erfindung bezieht sich insbesondere auf eine Vorrichtung und ein Verfahren zur Massenprüfung von Vorformlingen, sogenannten Preforms, zur Herstellung von Getränkeflaschen aus Polyethylenterephthalat (Kurzzeichen PET).

Bei der Herstellung von Behältern aus Kunststoff, insbesondere von Getränkeflaschen, werden zunächst Preforms einschließlich ihres Verschlussgewindes im Spritzguss hergestellt. Anschließend wird die Preforms zu fertigen Behältern weiterverarbeitet. Der Preform wird erwärmt, in ein Formwerkzeug eingespannt, auf die endgültige Länge gestreckt und anschließend mit Druckluft in die endgültige Form gebracht. Nach dem Abkühlen wird das Formwerkzeug geöffnet und der fertige Behälter ausgeworfen.

Fehlerhafte Preforms verursachen Produktionsausfälle sowie zusätzliche Material-, Energie- und Herstellungskosten. Es wird daher angestrebt, dass die zur Behälterherstellung verwendeten Preforms nahezu fehlerfrei sind. Typische Fehler sind Dimensionsfehler, Materialfehlstellen sowie Farbfehler. Dimensionsfehler können sich auf die Länge, Form und den Durchmesser des Preforms beziehen. Materialfehlstellen können sich beispielsweise aus einer fehlerhafte Länge des Anspritzpunktes, unvollständig geschmolzenem Material, Blasen, Ölspritzern sowie Verunreinigungen ergeben. Farbfehler umfassen Farb- und Intensitätsabweichungen sowie fehlerhafte Mengen an UV-Blockern.

Aus dem Stand der Technik sind daher bereits Vorrichtungen und Verfahren zur Prüfung und Aussortierung von Preforms bekannt, die die Preforms im kontinuierlichen Durchlauf auf mechanische und optische Fehler überprüfen und fehlerhafte Preforms aussortieren.

Eine aus der EP 2 112 502 A1 bekannte Vorrichtung umfasst mehrere ortsfest angeordnete Digitalkameras, die Bilder der Wandung der Preforms aufnehmen. Die vorzugsweise drei Digitalkameras sind jeweils in einem Winkel von 120° in einer Bildebene versetzt zueinander angeordnet. Eine solche Anordnung der Digitalkameras ermöglicht eine nahezu vollständige Abbildung der Wandung der Preforms. Die elektronischen Bilddateien der Digitalkameras gelangen in eine elektronische Verarbeitungseinheit, in der die Bilddateien verarbeitet werden. Beispielsweise können die Bilddateien mit gespeicherten Bezugsdateien verglichen werden. Abhängig von dem Ergebnis des Vergleichs, gibt die Verarbeitungseinheit bei nicht tolerierbaren Abweichungen einen Befehl an eine Einheit zur Aussonderung nicht akzeptierter Preforms aus. Der Transport der Preforms während der Aufnahme der Bilddateien erfolgt im Wege eines Überkopftransports der Preforms mit der Mündung nach oben. Für den Überkopftransport ist ein waagerecht laufendes Förderband vorgesehen, dass mindestens an oder nahe der Mittellinie perforiert ist. Auf der Rückseite dieses Förderbandes liegt ein partielles Vakuum an, welches jeden Preform nach unten hängend festhält und in Förderrichtung bewegt.

Die Vorrichtung nach der EP 2 112 502 A1 ist für eine Aufnahme jedes Hohlkörpers in einer Bildebene lediglich unter drei Winkeln, nämlich 0°, 120° und 240° ausgelegt.
Aus der DE 10 2009 011 270 B4 ist ein Verfahren und eine Vorrichtung zur Qualitätssicherung von zumindest partiell lichtdurchlässigen, rotationssymmetrischen Hohlkörpern bekannt. Bei den Hohlkörpern kann es sich beispielsweise um einen Getränkebehälter, jedoch auch um einen Preform handeln. Um bei dieser Vorrichtung mit einer digitalen Stehbildkamera Bilder von unterschiedlichen Abbildungsbereichen der Wandung des Hohlkörpers fertigen zu können, wird zwischen dem Hohlkörper und jeder digitalen Stehbildkamera zwischen der Fertigung von zwei Bildern eine Relativbewegung erzeugt. Die Relativbewegung wird dadurch erzeugt, dass der Hohlkörper im Bezug zu jeder stationären digitalen Stehbildkamera auf einem Drehteller um seine Rotationsachse wird. Hierzu ist die Drehachse des angetriebenen Drehtellers konzentrisch zur Mantelfläche des Hohlkörpers angeordnet, der zwischen der Aufnahme aufeinanderfolgender Bilder jeweils soweit gedreht wird, dass sich benachbarte Abbildungsbereiche in den anschließend gefertigten Bildern jeweils mindestens zur Hälfte überlappen.

Ferner ist aus dem am 23.08.2017 im Internet unter der Adresse https://www.intravis.de/de/produkte/prewatcher-iii/ heruntergeladenen Produktblatt PreWatcher ® III ein Inspektionssystem für die Massenprüfung von Preforms der INTRAVIS GmbH, 52068 Aachen bekannt, bei dem die Preforms an rotierenden Saugtellerrädern hängend vor feststehenden Kameras und Lichtquellen entlang einer Kreisbahn transportiert werden, deren Länge durch den Umfang des Saugtellerrades begrenzt ist.

Ausgehend von der EP 2 112 502 A1 liegt der Erfindung die Aufgabe zugrunde, eine Vorrichtung und ein Verfahren der eingangs erwähnten Art zu schaffen, bei der bzw. bei dem jeder Preform von allen Seiten mit Ausnahme der Mündung für die Prüfeinrichtung frei zugänglich ist und bezogen auf die Länge der Förderstrecke eine größere Anzahl von Prüfungen jedes Preforms möglich sind.

Diese Aufgabe wird durch eine Vorrichtung mit den Merkmalen des Anspruchs 1 sowie ein Verfahren mit den Merkmalen des Anspruchs 18 gelöst.

Die zweispurige Überkopffördereinrichtung ermöglicht es, dass die Hohlkörper während der Prüfung zusätzlich zu der translatorischen Bewegung in Förderrichtung in eine kontinuierliche Drehbewegung um deren Rotationsachse versetzt werden. Aufgrund der Drehung können die entlang der Förderstrecke vorgesehenen Kameras der Prüfeinrichtung zahlreiche Ansichten des Preforms von allen Seiten aufnehmen.

Die einstellbare Relativgeschwindigkeit zwischen den beiden Bändern und die daraus resultierende Drehbewegung der Hohlkörper bewirkt außerdem, dass lediglich an einer Seite der zweispurigen Überkopffördereinrichtung eine Seitenführung erforderlich ist. Die lediglich an einer Seite erforderliche Seitenführung beeinträchtigt eine allseitige Aufnahme aufgrund der kontinuierlichen Drehung nicht. Die Wandung jedes Hohlkörpers ist während des Durchlaufs durch die Förderstrecke für die Kameras vollständig sichtbar.
Die Seitenführung kann beispielsweise als Leiste oder Führungsschiene ausgeführt sein.

Die erfindungsgemäße Prüfvorrichtung ist skalierbar. Für eine geringe Anzahl von Prüfungen ist lediglich eine kurze Förderstrecke, für eine große Anzahl von Prüfungen eine längere Förderstrecke zur Anordnung der für die unterschiedlichen Prüfaufgaben notwendigen Kameras erforderlich.

Vorzugsweise liegen die Oberflächen beider Bänder der zweispurigen Überkopffördereinrichtung in einer Transportebene. Die Mündung jedes Hohlkörpers liegt bei einer derartigen Anordnung der beiden Bänder entlang eines Kreisbogens an dem einen und dem anderen Band der Überkopffördereinrichtung an. Die linienförmige Anlage entlang der beiden Kreisbögen verbessert die Stabilität der Hohlkörper während des Überkopftransports, insbesondere werden Pendelbewegungen in und gegen die Förderrichtung bei geringem Abstand zwischen den Bändern weitgehend vermieden.

Auch der Abstand zwischen den beiden Bändern beeinflusst die Pendelneigung der geförderten Hohlkörper. Je größer der Abstand, desto eher neigen die Hohlkörper aufgrund der kleineren Anlagefläche der Mündung an den Bändern zum Pendeln. Ein geringerer Abstand zwischen den Bändern hat aufgrund der größeren Anlagefläche jedoch einen höheres, der Drehbewegung entgegengerichtetes Bremsmoment zur Folge.

Insbesondere bei großem Abstand zwischen den Bändern kann die Pendelneigung durch mindestens einen im dem Spalt ortsfest angeordneten Steg reduziert werden. Jeder Steg ist derart angeordnet, dass die Mündung jedes Preforms an dem Steg anliegt. Jeder Steg ist derart in dem Spalt angeordnet und /oder dimensioniert, dass die Funktion der Unterdruckerzeugungseinrichtung nicht beeinträchtigt wird.

Bei gleichmäßiger Anlage der Mündung auf beiden Bändern sowie übereinstimmender Reibpaarung zwischen der Mündung und der Oberfläche beider Bänder, bestimmt die Drehrichtung der Hohlkörper, an welchem der beiden Bänder die Seitenführung angeordnet ist. Die Seitenführung wird seitlich neben demjenigen Band angeordnet, bei dem die Drehbewegung des Hohlkörpers ein Abrollen der Wandung auf der Seitenführung in Förderrichtung bewirken würde. Mit anderen Worten: Aufgrund der notwendigen Relativgeschwindigkeit zwischen den beiden Bändern zur Erzeugung der Drehbewegung ist der Geschwindigkeitsvektor eines der beiden Bänder in Förderrichtung kleiner. An dem Band mit dem kleineren Geschwindigkeitsvektor ist die Seitenführung unter den genannten Bedingungen anzuordnen.

In einer Ausgestaltung der Erfindung ist ein Band in Richtung desjenigen Seitenrandes des Bandes gegenüber der Horizontalen geneigt, der unmittelbar an einen Seitenrand des anderen, horizontal angeordneten Bandes angrenzt. Die Mündung jedes Hohlkörpers liegt bei einer derartigen Anordnung an dem horizontalen Band entlang eines Kreisbogens und an dem geneigten Band punktuell an. Durch die punktuelle Anlage wird die Reibung zwischen der Mündung und der Oberfläche des geneigten Bandes und dadurch das der Rotation entgegenwirkende Bremsmoment reduziert. Des Weiteren drückt die geneigte Oberfläche des Bandes die Mündung des Hohlkörpers in Richtung der Seitenführung. Der Vorteil der reduzierten Reibung ist gegen den Nachteil einer größeren Pendelneigung der Hohlkörper abzuwägen, sodass insbesondere bei kürzeren und/oder leichteren Hohlkörpern ein geneigtes Band zum Einsatz gelangen kann. Der Neigungswinkel des Bandes beträgt vorzugsweise weniger als 45° gegenüber der Horizontalen, besonders bevorzugt weniger als 10°.

Vorzugsweise ist jedes angetriebene Band Bestandteil eines Bandförderers, auch als Gurtförderer bezeichnet. Ein Bandförderer umfasst eine Tragkonstruktion, einen Antrieb umfassend mindestens eine Antriebstrommel, eine Umlenkstation umfassend mindestens eine Umlenktrommel sowie einen umlaufenden Fördergurt. Ferner verfügt der Bandförderer über Spannmittel, um die erforderliche Spannung in dem Fördergurt aufrecht zu erhalten. Der Untertrum des umlaufenden Fördergurts bildet das in Förderrichtung bewegbare Band der Überkopffördereinrichtung.

In einer Ausführungsform der Erfindung ist lediglich eines der beiden Bänder angetrieben, das andere ortsfest. Die mit der Mündung in Berührung stehende Oberfläche des angetriebenen Bandes bewegt sich in Förderrichtung. Die Relativgeschwindigkeit zwischen dem bewegten und dem ortsfesten Band versetzt jeden Hohlkörper zusätzlich zu der translatorischen Bewegung in Förderrichtung in eine Drehbewegung um dessen Rotationsachse.

In einer bevorzugten Ausführungsform der Erfindung sind beide Bänder angetrieben. Bei gleichgerichteter Bewegung der Bänder wird die Relativgeschwindigkeit zwischen den beiden Bändern durch unterschiedliche Bandgeschwindigkeiten eingestellt. Bei entgegengesetzter Bewegung der Bänder wird die Relativgeschwindigkeit zwischen den beiden Bändern durch unterschiedliche Bandgeschwindigkeiten eingestellt, wobei das in Förderrichtung laufende Band eine höhere Geschwindigkeit als das entgegen zur Förderrichtung laufende Band aufweist.

Bei entgegengesetzter Bewegungsrichtung der Bänder lassen sich hohe Relativgeschwindigkeiten und dadurch eine große Anzahl von Drehungen jedes Hohlkörpers entlang der Förderstrecke erreichen. Bei gleichgerichteter Bewegungsrichtung der Bänder lassen sich geringere Relativgeschwindigkeiten und damit eine insgesamt geringere Anzahl der Drehungen jedes Hohlkörpers entlang der Förderstrecke einstellen.

Um die Relativgeschwindigkeit zwischen den beiden Bändern einzustellen, weist die Antriebsteuerung eine getrennte Drehzahlregelung für den Antrieb jedes angetriebenen Bandes auf.

Die Oberflächen der Bänder bestehen vorzugsweise aus einem elastischen Material, beispielsweise einem gummielastischen weichen Material. Das elastische Material gleicht geringfügige Unebenheiten in der Bandoberfläche und/oder der Mündung des Hohlkörpers aus. Zudem hat das elastische Material eine Dichtwirkung, die zu einem sicheren Halten der Hohlkörper aufgrund des wirkenden Unterdrucks beiträgt.

Die Hohlkörper können zentriert von den beiden Bändern der Überkopffördereinrichtung transportiert werden, sodass gleichlange Kreisbögen an den beiden Bändern anliegen. Möglich ist jedoch auch ein exzentrischer Transport, sodass unterschiedlich lange Kreisbögen an dem einen und dem anderen Band des Überkopfförderers anliegen. Hierdurch lassen sich die Reibflächen zwischen der Mündung und dem einen und dem anderen Band des Überkopfförderers anpassen, um gezielt die Drehbewegung sowie die translatorische Bewegung jedes Hohlkörpers zu steuern. Eine größere Reibfläche zwischen jedem Preform und dem schneller laufenden Band unterstützt die sichere Anlage an der Seitenführung. Durch Anordnung der Seitenführung mit unterschiedlichem seitlichem Versatz zu den seitlichen Rändern des langsamer laufenden Bandes können die unterschiedlich großen Reibflächen eingestellt werden.

Eine alternative oder zusätzliche Möglichkeit zur Steuerung besteht darin, dass die Oberflächen der beiden Bänder unterschiedliche Materialeigenschaften aufweisen, so dass sich unterschiedliche Reibpaarungen zwischen der Mündung jedes Hohlkörpers und den beiden Bändern ergeben.

Die Gesamtbreite, das heißt der Abstand zwischen den äußeren Rändern der benachbarten Bänder der Überkopffördereinrichtung ist größer oder gleich dem maximalen Durchmesser der zu transportierenden Hohlkörper. Hierdurch wird sichergestellt, dass von der Unterdruckerzeugungseinrichtung keine Fremdluft an den seitlichen Rändern angesaugt wird, die ein Abfallen der ausschließlich von dem Unterdruck gehaltenen Hohlkörper zur Folge haben könnte.

Um die Prüfvorrichtung an Hohlkörper mit unterschiedlichen Durchmessern anpassen zu können, ist der Abstand zwischen den beiden Bändern vorzugsweise einstellbar. Sind beide Bänder Bestandteile eines Bandförderers, kann die Einstellung des Abstandes beispielsweise durch Distanzbolzen zwischen den Tragkonstruktionen der beiden Bandförderer erfolgen. Denkbar ist auch eine automatische Einstellung des Abstandes mittels quer zur Förderrichtung wirksamen Linearantrieben zwischen den Tragkonstruktionen der Bandförderer.

Die Unterdruckerzeugungseinrichtung der Prüfvorrichtung hält die Hohlkörper mit ihrer Mündung an den beiden Bändern ausschließlich durch den herrschenden Unterdruck; sie umfasst vorzugsweise einen sich in Längsrichtung entlang der Förderstrecke erstreckenden Unterdruckkanal sowie mindestens eine mit dem Unterdruckkanal fluidleitend verbundene Vakuumpumpe. Die fluidleitende Verbindung zwischen der Vakuumpumpe und dem Unterdruckkanal erfolgt vorzugsweise über mehrere Leitungen, die in Längsrichtung des Kanals versetzt zueinander an den Unterdruckkanal angeschlossen sind. Hierdurch wird eine gleichmäßige Unterdruckverteilung über die gesamte Länge des Unterdruckkanals erreicht. Der Unterdruckkanal ist insbesondere als Hohlprofil, beispielsweise mit rechteckigem Querschnitt ausgeführt, wobei der Kanal mindestens eine Öffnung aufweist, durch die der Unterdruck auf die Hohlkörper wirkt.

Sofern die beiden Bänder der Vorrichtung in einem parallelen Abstand zueinander angeordnet sind, ist der Unterdruckkanal vorzugsweise in dem Spalt zwischen den beiden Bändern angeordnet. Dabei springt die Oberfläche des Unterdruckkanals gegenüber der durch die beiden Bänder aufgespannten Transportebene geringfügig zurück, um eine unmittelbare Anlage der Mündung jedes Hohlkörpers an dem Unterdruckkanal zu vermeiden.

Alternativ kann der Unterdruckkanal unmittelbar oberhalb der der Oberfläche der beiden Bänder gegenüberliegenden Rückseite angeordnet sein. Eine derartige Anordnung kommt insbesondere dann in Betracht, wenn die Breite des Unterdruckkanals größer als der Abstand zwischen den beiden Bändern ist. Die seitlichen Ränder des Unterdruckkanals können bei einer derartigen Anordnung zugleich als Anlagefläche für die Rückseite der beiden Bänder dienen.

Weist der Unterdruckkanal lediglich eine Öffnung auf, ist diese vorzugsweise als Längsschlitz ausgeführt, der in dem Spalt zwischen den beiden Bändern mündet und sich in Förderrichtung über die Länge der Förderstrecke erstreckt. Vorzugsweise weist der Unterdruckkanal jedoch eine Vielzahl von Öffnungen über die gesamte Länge der Förderstrecke auf, die in dem Spalt zwischen den beiden Bändern münden.

Jede Öffnung ist entlang einer mittig oder außermittig verlaufenden Linie in dem Spalt zwischen den beiden Bändern angeordnet. Eine außermittige, in Richtung der Seitenführung versetzte Linie unterstützt die sichere Anlage der Preforms an der Seitenführung, insbesondere in Kombination mit der oben erwähnten größeren Reibfläche zwischen jedem Preform und dem schneller laufenden Band.

Sind die beiden Bänder ohne Abstand unmittelbar nebeneinander angeordnet, muss der mindestens eine Unterdruckkanal zwingend oberhalb der Rückseite der beiden Bänder angeordnet sein. Der Unterdruckkanal weist dann über die Länge der Förderstrecke mehrere Öffnungen auf, die oberhalb der Rückseite beider Bänder münden und den Unterdruck durch die in diesem Fall gasdurchlässigen Bänder hindurch zur Wirkung bringen. Hierzu können die Bänder entlang einer in Längsrichtung des Bandes verlaufenden Linie perforiert oder vollständig aus einem gasdurchlässigen Material, wie beispielsweise einem Textilgewebe bestehen.

Aus der vorstehenden Beschreibung ergibt sich, dass die Parameter des Überkopfförderers, d.h. die Breite und Länge der Bänder, die Relativgeschwindigkeit zwischen den Bändern, deren Abstand, die Reibpaarung zwischen Bandoberfläche und Mündung sowie die Höhe des wirksamen Unterdrucks abhängig von dem Durchmesser der Mündung, der Geometrie und dem Gewicht der Hohlkörper sowie den durchzuführenden Prüfaufgaben im Einzelfall abzustimmen sind.

Die beispielsweise mittels einer Spritzgussmaschine hergestellten Preforms werden der Prüfvorrichtung vor deren Weiterverarbeitung mittels einer Zuführeinrichtung vereinzelt und ausgerichtet zugeführt. Als Zufuhreinrichtung kommt beispielsweise ein Riemenbandförderer in Betracht, der die Hohlkörper mit senkrecht ausgerichteter Rotationsachse mit der Mündung nach oben stehend in einem definierten, vorgegebenen Abstand transportiert. Die derart ausgerichteten Preforms werden an den Überkopfförderer angenähert, bis die Mündung aufgrund des herrschenden Unterdrucks an den beiden Bändern des Überkopfförderers zur Anlage gelangt.

Die während des anschließenden Überkopftransports entlang der Förderstrecke von den Stehbildkameras der Prüfeinrichtung aufgenommenen Bilder gelangen als elektronische Bilddaten in die Bildverarbeitungseinheit der Prüfeinrichtung, in der die Bilddaten verarbeitet werden. Beispielsweise können die elektronischen Bilddateien jedes aufgenommenen Preforms mit gespeicherten Referenzdateien verglichen werden. Wenn die aufgenommene Bilddatei eines Preforms nicht mit der gespeicherten Referenzdatei übereinstimmt, gibt die Bildverarbeitungseinheit ein Aussonderungssignal an eine Aussonderungseinrichtung zum Aussortieren fehlerhafter Hohlkörper aus. Die Aussonderungseinrichtung ist vorzugsweise am Ende der Förderstrecke angeordnet oder ist der Prüfeinrichtung unmittelbar nachgeordnet. Das Aussortieren fehlerhafter Hohlkörper durch die Aussonderungseinrichtung kann beispielsweise durch zeitweiliges Aufheben des Vakuums in einem Teilabschnitt der Förderstrecke oder durch einen mechanischen oder pneumatischen Ausstoßer quer zur Förderrichtung erfolgen.

Nachfolgend werden die erfindungsgemäße Vorrichtung und das Verfahren zum Prüfen eines Preforms anhand der Zeichnungen näher erläutert. Es zeigen
- **Figur 1**: eine schematische Darstellung der Herstellung und Prüfung von Preforms,
- **Figur 2a**: eine schematische Seitenansicht der Prüfvorrichtung,
- **Figur 2b**: eine schematische Aufsicht auf die Prüfvorrichtung nach Figur 2a,
- **Figur 2c**: eine Veranschaulichung, wie die unterschiedlichen Bandgeschwindigkeiten einer Überkopffördereinrichtung jeden Preform in Drehung versetzen,
- **Figur 2d**: eine schematische perspektivische Ansicht von unten auf die erfindungsgemäße Prüfvorrichtung,
- **Figur 3**: eine schematische Seitenansicht einer Prüfvorrichtung mit einem geneigten Band,
- **Figur 4**: eine schematische Vorderansicht einer als Bandförderer ausgebildeten Überkopffördereinrichtung einer erfindungsgemäßen Prüfvorrichtung sowie

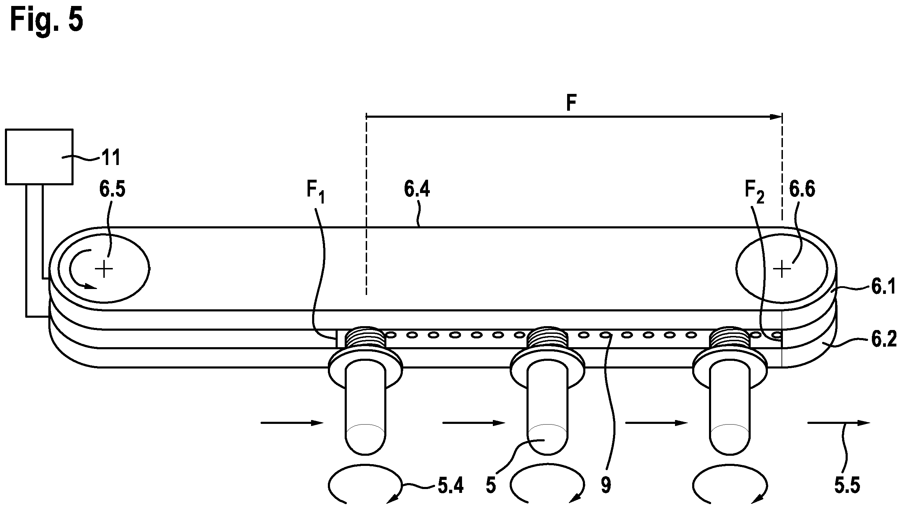

- **Figur 5**: eine schematische perspektivische Ansicht einer Überkopffördereinrichtung nach Figur 4.

Die erfindungsgemäße Prüfvorrichtung (1) ist in einer Herstellungskette von Kunststoffbehältern, insbesondere PET-Flaschen, zwischen einer Spritzgussmaschine (2) zur Herstellung von Preforms (3) und der Behälterendfertigung (3) aus den Preforms (5) angeordnet. Mittels einer nicht dargestellten Handhabungseinrichtung werden die in der Spritzgussmaschine hergestellten Preforms (5) an eine Zuführeinrichtung (4) übergeben, die zum aufeinanderfolgenden Zuführen der Preforms (5) mit nach oben weisender Mündung (5.1) zu einer Förderstrecke F der Prüfvorrichtung (1) eingerichtet ist. Bei der Zuführeinrichtung (4) kann es sich beispielsweise um einen Riemenbandförderer handeln, mit dem die Preforms (5) auf einer gegenüber der Horizontalen geneigten Förderbahn von unten an eine zweispurige Überkopffördereinrichtung (6) in der Prüfvorrichtung (1) angenähert und schließlich übergeben werden. Die Prüfvorrichtung (1) umfasst weiterhin eine Prüfeinrichtung (7) zum Aufnehmen und Verarbeiten von Bildern der Wandung (5.3) jedes Preforms (5) umfassend mehrere Stehbildkameras (7.1) sowie eine Bildverarbeitungseinheit (7.2) zum Verarbeiten und Auswerten der Bilddaten jeder Stehbildkamera (7.1).

Schließlich ist der Prüfvorrichtung (1) eine Aussonderungseinrichtung (8) zum Aussortieren fehlerhafter Preforms (5.2) in Förderrichtung nachgeordnet.

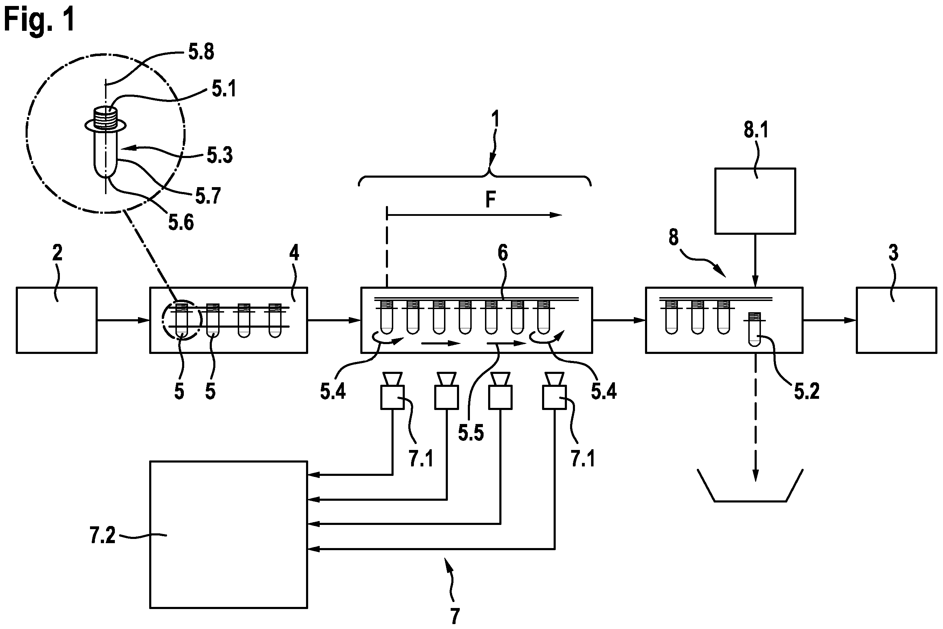

In Figur 1 ist die Ausrichtung der Stehbildkameras (7.1) auf die Preforms entlang der Förderstrecke F lediglich schematisch dargestellt. Die Stehbildkameras (7.1) werden in der Praxis derart ausgerichtet, dass sämtliche Bereiche der Wandung (5.3), insbesondere die Mantelfläche (5.7) und die Bodenfläche (5.6) unter Berücksichtigung der kontinuierlichen Drehbewegung (5.4) sowie der translatorischen Bewegung (5.5) jedes Preforms (5) aufgenommen werden können.

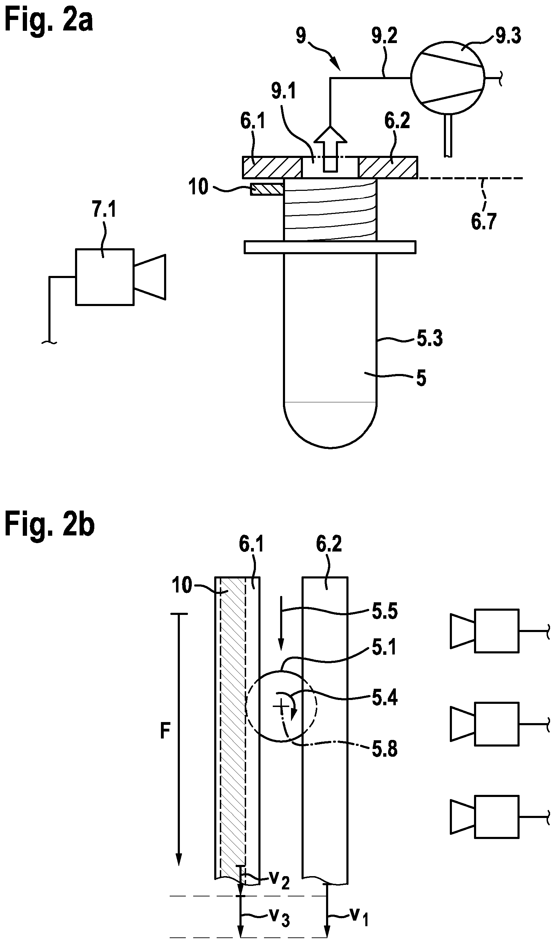

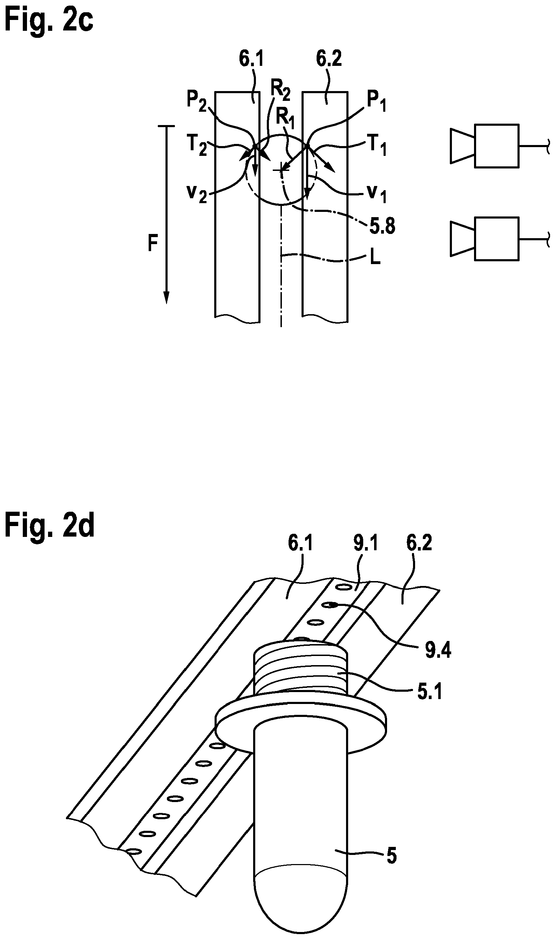

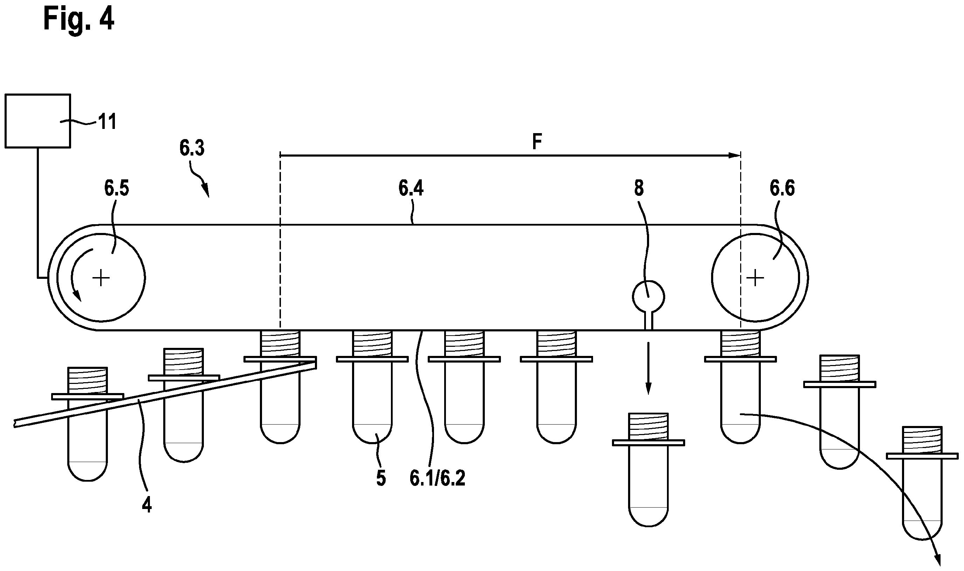

Nachfolgend wird anhand der Figuren 2 a - 2 d der Aufbau der für die Funktion der Prüfvorrichtung (1) wesentlichen zweispurigen Überkopffördereinrichtung (6) näher erläutert. Die Überkopffördereinrichtung (6) weist zwei parallel zueinander verlaufende Bänder (6.1, 6.2) auf, wobei im dargestellten Ausführungsbeispiel beide Bänder (6.1, 6.2) in Förderrichtung F angetrieben sind. Die Bänder (6.1, 6.2) sind jeweils Bestandteil eines schematisch in Figur 4 dargestellten Bandförderers (6.3) mit einem zwischen einer Antriebstrommel (6.5) und einer Umlenktrommel (6.6) umlaufenden Fördergurt (6.4). Der im Untertrum befindliche Abschnitt des Fördergurtes (6.4) bildet jeweils das in Förderrichtung F bewegte Band (6.1, 6.2) der erfindungsgemäßen Prüfvorrichtung (1).

In dem Spalt zwischen den im Abstand zueinander angeordneten Bändern (6.1, 6.2) ist ein Unterdruckkanal (9.1) einer Unterdruckerzeugungseinrichtung (9) angeordnet (der Übersichtlichkeit halber nur in Figur 2 a, d dargestellt). Die Unterdruckerzeugungseinrichtung (9) ist über in Figur 2 a lediglich schematisch dargestellte Leitungen (9.2) fluidleitend mit einer Vakuumpumpe (9.3) verbunden. Wie insbesondere aus Figur 2 d erkennbar, weist der Unterdruckkanal (9.1) eine Reihe von Öffnungen (9.4) auf, die in der durch die beiden Bänder (6.1, 6.2) aufgespannten Transportebene (6.7) münden. Der Unterdruckkanal (9.1) erzeugt einen gleichmäßigen Unterdruck entlang der Förderstrecke F, der die Preforms (5) mit ihrer Mündung (5.1) an den beiden Bändern (6.1) hält.

Die Seitenführung (10) ist unmittelbar unterhalb des Bandes (6.1) derart angeordnet, dass die Mündung (5.1) jedes Preforms (5) in dem dargestellten Ausführungsbeispiel zu gleichen Teilen an dem Band (6.1) und dem Band (6.2) anliegt (vgl. Figur 2b). Zur Veränderung der in die Mündung (5.1) jedes Preforms (5) eingeleiteten Kräfte kann es in einer Abwandlung des dargestellten Ausführungsbeispiels sinnvoll sein, dass die Anlageflächen der Mündung (5.1) jedes Preforms auf dem Band (6.1) und dem Band (6.2) unterschiedlich groß sind.

Die Seitenführung (10) führt jeden Preform (5) während des Überkopftransportes entlang der Förderstrecke F, indem dessen Wandung (5.3) im Bereich des Gewindes die Seitenführung (10) berührt. Die Seitenführung (10) ist gegenüber den bewegten Bändern (6.1, 6.2) ortsfest an einer nicht dargestellten Tragkonstruktion befestigt und als Profilleiste mit rechteckigem Querschnitt ausgeführt. Zur Erhöhung der Führungsstabilität kann die Seitenführung (10) auch mehrere einseitig an der Wandung (5.3) jedes Preforms (5) zur Anlage gelangende Profilleisten aufweisen.

Schließlich verfügen die beiden Bandförderer (6.1, 6.2) über eine Antriebssteuerung, die zur Einstellung einer Relativgeschwindigkeit zwischen den beiden Bändern eingerichtet ist, um die Preforms (5) zusätzlich zu der translatorischen Bewegung (5.5) in Förderrichtung F in eine Drehbewegung (5.4) um deren Rotationsachse (5.8) zu versetzen. In Figur 2b ist erkennbar, dass das Band (6.2) mit einer höheren Geschwindigkeit v₁ und das Band (6.2) mit einer geringeren Geschwindigkeit v₂ von den Antriebstrommeln (6.5) des jeweiligen Bandförderers (6.3) angetrieben wird. Infolgedessen ergibt sich zwischen den beiden Bändern (6.1, 6.2) eine Relativgeschwindigkeit v₃.

Figur 2b verdeutlicht, wie die unterschiedlichen Geschwindigkeiten v₁, v₂ jeden Preform (5) zusätzlich zu der translatorischen Bewegung (5.5) in eine Drehbewegung (5.4) versetzen. Beispielhaft werden die beiden Punkte P1, P2 auf der Berührungslinie der Mündung (5.1) des Preform (5) auf der Oberfläche der Bänder (6.1, 6.2) betrachtet. Die Punkte P1, P2 schließen mit dem Schnittpunkt zwischen der Längsachse L der Überkopffördereinrichtung (6) und Rotationsasches (5.8) jeweils einen übereinstimmenden Mittelpunktswinkel ein. Die Länge der Berührungslinien der Mündung (5.1) auf beiden Bändern (6.1, 6.2) und die Reibpaarungen stimmen überein.

Alle Punkte auf den Bändern (6.1, 6.2) haben einen Geschwindigkeitsvektor in Förderrichtung F mit der Geschwindigkeit v₁ beziehungsweise v₂. Die aufgrund des Geschwindigkeitsvektors v₁ an dem Punkt P1 in den Preform (5) eingeleiteten Kräfte teilen sich in einen tangentialen Vektor T1 und einen radialen Vektor R1 in Richtung der Rotationsachse (5.8) auf. In gleicher Weise teilen sich die an dem zur Längsachse L spiegelsymmetrischen Punkt P2 durch den kleineren Geschwindigkeitsvektor v₂ eingeleitete Kräfte in einen tangentialen Vektor T₂ und einen radialen Vektor R₂ in Richtung der Rotationsachse (5.8) auf, jedoch mit geringerer Größe.

In gleicher Weise können für sämtliche zur Längsachse L spiegelsymmetrischen Punkte entlang der Anlagelinien der Mündung (5.1) an dem Band (6.1) und dem Band 6.2) die Bewegungsvektoren T₁, R₁ beziehungsweise T₂, R₂ ermittelt werden. Da die Summe der Bewegungsvektoren T₁ größer als die Summe der Bewegungsvektoren T₂ ist, kommt es zu der Drehbewegung (5.4) des Preforms (5). Überraschend hat sich gezeigt, dass sich der Preform (5) mit seiner Wandung (5.3) durch die unterschiedlich großen Geschwindigkeitsvektoren v₁ beziehungsweise v₂ in Förderrichtung F an der lediglich einseitig erforderlichen Seitenführung (10) während des Transports anlegt. Die Seitenführung (10) ist entlang des Bandes (6.1) angeordnet, dessen Geschwindigkeitsvektor v₂ in Förderrichtung kleiner ist. Durch die einseitige, besonders flach ausgeführte Seitenführung (10) wird die Sicht der Stehbildkameras (7.1) auf die rotierenden Preforms (5) praktisch nicht beeinträchtigt.

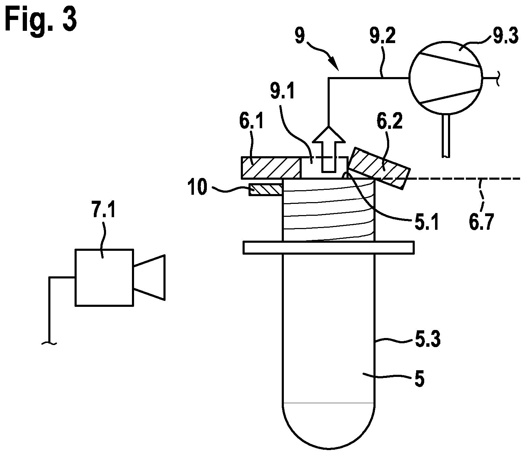

Figur 3 zeigt eine Abwandlung der Vorrichtung nach Figur 2 bei der das Band (6.2) in Richtung desjenigen Seitenrandes des Bandes (6.2) gegenüber der horizontalen Transportebene (6.7) um einen Winkel von etwa 15° geneigt ist. Die Neigung des Bandes (6.2) hat zur Folge, dass die Mündung an dem Band (6.2) lediglich punktförmig, nicht jedoch linienförmig anliegt. Infolgedessen werden die der Drehbewegung (5.4) entgegenstehender Reibkräfte zwischen der Mündung (5.1) und der Oberfläche des Bandes (6.2) reduziert. Zugleich wird der Preform in Richtung der Führung (10) aufgrund der Neigung gedrängt.

Die Prüfvorrichtung (1) arbeitet wie folgt:
Nach dem Übergeben der Preforms (5) an die Überkopffördereinrichtung (6) werden die Preforms in der Förderstrecke in Förderrichtung F an den auf die Wandung (5.3), insbesondere den Boden (5.6) und den Mantel (5.7) ausgerichteten Stehbildkameras (7.1) verbeigeführt. Aufgrund der kontinuierlichen Drehung (5.4) um die Rotationsachse (5.8) kann jede Stehbildkamera (7.1) eine vollständige Abbildung der Oberfläche jedes Preforms (5) erfassen. Die aufgenommenen Bilddateien werden in der Bildverarbeitungseinheit (7.2) verarbeitet und mit einem dort hinterlegten Referenzbild für den Preform verglichen.

Ergibt sich eine außerhalb eines Toleranzbereichs liegende Abweichung zwischen den aufgenommenen Bilddateien in Bezug auf einen zu detektierenden Fehler, gibt die Datenverarbeitungseinheit (7.2) über eine Steuerung einen Befehl an die Aussonderungseinrichtung (8) aus, die den defekten Preform (5.2) aussondert.

Aufgrund der Skalierbarkeit der Länge der Förderstrecke F lassen sich entsprechend der Anzahl der erforderlichen Untersuchungen der Preforms (5) auf Fehler eine entsprechende Anzahl von Stehbildkameras (7.1) anordnen. Des Weiteren ist es aufgrund der Drehung (5.4) der Preforms (5) möglich, auf gegenüberliegenden Längsseiten der Förderstrecke Stehbildkameras (7.1) zur Detektion unterschiedlicher Fehler anzuordnen. Die Wandungen (5.3) der Preforms (5) werden vorzugsweise von nicht dargestellten Lichtquellen beleuchtet.

| Nr. | Bezeichnung |
|---|---|
| 1. | Prüfvorrichtung |
| 2. | Spritzgussmaschine |
| 3. | Behälter-Endfertigung |
| 4. | Zuführeinrichtung |
| 5. | Preforms |
| 5.1. | Mündung |
| 5.2. | Fehlerhafte Preforms |
| 5.3 | Wandung |
| 5.4. | Drehbewegung |
| 5.5 | Translatorische Bewegung |
| 5.6 | Boden |
| 5.7 | Mantel |
| 5.8 | Rotationsachse |
| 6 | Überkopffördereinrichtung |
| 6.1 | Band |
| 6.2 | Band |
| 6.3 | Bandförderer |
| 6.4 | Fördergurt |
| 6.5 | Antriebstrommel |
| 6.6 | Umlenktrommel |
| 6.7 | Transportebene |
| 7. | Prüfeinrichtung |
| 7.1 | Stehbildkamera |
| 7.2 | Bildverarbeitungseinheit |
| 8. | Aussonderungseinrichtung |
| 8.1 | Ausstoßer |
| 9. | Unterdruckerzeugungseinrichtung |
| 9.1 | Unterdruckkanal |
| 9.2 | Leitungen |
| 9.3 | Vakuumpumpe |
| 10. | Seitenführung |
| 11. | Antriebssteuerung |

## Patentansprüche

1. Vorrichtung (1) zum Prüfen von um eine Rotationsachse (5.8) rotationssymmetrischen Hohlkörpern (5) mit einer Mündung (5.1) während des vereinzelten Überkopftransports der Hohlkörper (5) in einer Förderrichtung entlang einer Förderstrecke (F), umfassend
- eine Prüfeinrichtung (7) zum Aufnehmen und Verarbeiten von Bildern der Wandung (5.3) jedes Hohlkörpers (5),
- eine zweispurige Überkopffördereinrichtung (6), die zwei parallel zueinander verlaufende Bänder (6.1, 6.2) aufweist, wobei mindestens eines der beiden Bänder (6.1, 6.2) mittels eines Antriebs in Förderrichtung bewegbar ist,
- eine entlang der Förderstrecke (F) angeordnete Unterdruckerzeugungseinrichtung (9), eingerichtet um die Hohlkörper (5) mit ihrer Mündung (5.1) an den beiden Bändern (6.1, 6.2) ausschließlich durch den herrschenden Unterdruck zu halten, wobei der Abstand zwischen den Bändern (6.1, 6.2) derart bestimmt ist, dass die Mündung jedes zu prüfenden Hohlkörpers teilweise an dem einen und teilweise an dem anderen der beiden Bänder anliegt,
- eine Antriebsteuerung (11), die zur Einstellung einer Relativgeschwindigkeit zwischen den beiden Bändern (6.1, 6.2) eingerichet ist, um die Hohlkörper zusätzlich zu der translatorischen Bewegung (5.5) in Förderrichtung in eine Drehbewegung (5.4) um deren Rotationsachse (5.8) zu versetzen und
- eine Seitenführung (10), die entlang eines der Bänder (6.1) derart angeordnet ist, dass jeder Hohlkörper (5) während des Überkopftransports in Förderrichtung mit seiner Wandung (5.3) die Seitenführung (10) berührt.

2. Vorrichtung nach Anspruch 1, **dadurch gekennzeichnet, dass** die Oberflächen beider Bänder (6.1, 6.2) in einer Transportebene (6.7) liegen.

3. Vorrichtung nach Anspruch 2, **dadurch gekennzeichnet, dass** die beiden parallel zueinander verlaufenden Bänder (6.1, 6.2) unterschiedlich große Geschwindigkeitsvektoren v₁, v₂ in Förderrichtung F aufweisen und die Seitenführung (10) entlang desjenigen der beiden Bänder (6.1) angeordnet ist, dessen Geschwindigkeitsvektor v₂ in Förderrichtung kleiner ist.

4. Vorrichtung nach Anspruch 1, **dadurch gekennzeichnet, dass**
- ein Band (6.2) in Richtung desjenigen Seitenrandes des Bandes (6.2) gegenüber der Horizontalen geneigt ist, der unmittelbar an einen Seitenrand des anderen Bandes (6.1) angrenzt und
- die Seitenführung seitlich an dem anderen Band (6.1) angeordnet ist.

5. Vorrichtung nach einem der Ansprüche 1 bis 4, **dadurch gekennzeichnet, dass** beide Bänder (6.1, 6.2) angetrieben sind.

6. Vorrichtung nach einem der Ansprüche 1 bis 5, **dadurch gekennzeichnet, dass** mindestens eines der beiden Bänder (6.1, 6.2) ein Bestandteil eines Bandförderers (6.3) ist.

7. Vorrichtung nach einem der Ansprüche 1 bis 6, **dadurch gekennzeichnet, dass** die Oberflächen der Bänder (6.1, 6.2) aus elastischem Material bestehen.

8. Vorrichtung nach einem der Ansprüche 1 bis 7, **dadurch gekennzeichnet, dass** die Oberflächen der Bänder (6.1, 6.2) unterschiedliche Materialeigenschaften aufweisen.

9. Vorrichtung nach einem der Ansprüche 1 bis 8, **dadurch gekennzeichnet, dass** der Abstand zwischen den beiden Bändern (6.1, 6.2) einstellbar ist.

10. Vorrichtung nach einem der Ansprüche 1 bis 9, **dadurch gekennzeichnet, dass** die Unterdruckerzeugungseinrichtung (9) einen sich in Längsrichtung (L) entlang der Förderstrecke (F) erstreckenden Unterdruckkanal (9.1) sowie eine mit dem Unterdruckkanal (9.1) fluidleitend verbundene Vakuumpumpe (9.3) umfasst.

11. Vorrichtung nach Anspruch 10, **dadurch gekennzeichnet, dass** der Unterdruckkanal (9.1) in einem Spalt zwischen den beiden Bändern (6.1, 6.2) angeordnet ist.

12. Vorrichtung nach Anspruch 10, **dadurch gekennzeichnet, dass** der Unterdruckkanal (9.1) auf der der Oberfläche der beiden Bänder (6.1, 6.2) gegenüberliegenden Rückseite angeordnet ist.

13. Vorrichtung nach einem der Ansprüche 1 bis 12, **dadurch gekennzeichnet, dass** die Antriebssteuerung (11) eine getrennte Drehzahlregelung für den Antrieb jedes angetriebenen Bandes (6.1, 6.2) umfasst.

14. Vorrichtung nach einem der Ansprüche 1 bis 13, **dadurch gekennzeichnet, dass** eingangs der Förderstrecke (F) eine Zuführeinrichtung (4) angeordnet ist, die zum aufeinanderfolgenden Zuführen der Hohlkörper (5) zu der Förderstrecke (F) mit nach oben weisender Mündung (5.1) und senkrechter Rotationsachse (5.8) eingerichtet ist.

15. Vorrichtung nach einem der Ansprüche 1 bis 14, **gekennzeichnet durch** eine Aussonderungseinrichtung (8) zum Aussortieren fehlerhafter Hohlkörper (5).

16. Vorrichtung nach einem der Ansprüche 1 bis 15, **dadurch gekennzeichnet, dass** die Prüfeinrichtung (7) mehrere digitale Stehbildkameras (7.1) aufweist, die auf die Hohlkörper (5) in der Förderstrecke (F) ausgerichtet sind.

17. Vorrichtung nach Anspruch 16, **dadurch gekennzeichnet, dass** die Prüfeinrichtung (7) eine Bildverarbeitungseinheit (7.2) zur Verarbeitung der Bilddaten jeder Stehbildkamera (7.1) aufweist.

18. Verfahren zum Prüfen von um eine Rotationsachse (5.8) rotationssymmetrischen Hohlkörpern (5) mit einer Mündung (5.1) während des vereinzelten Überkopftransports der Hohlkörper (5) entlang einer Förderstrecke (F), mit einer Prüfeinrichtung (7) zum Aufnehmen und Verarbeiten von Bildern der Wandung (5.3) jedes Hohlkörpers (5) und einer zweispurigen Überkopffördereinrichtung (6), die zwei parallel zueinander verlaufende Bänder (6.1, 6.2) aufweist, wobei mindestens eines der beiden Bänder mittels eines Antriebs in Förderrichtung bewegbar ist, umfassend folgende Schritte
- Aufnehmen von Bildern der Wandung (5.3) jedes Hohlkörpers (5) während des Überkopftransports,
- Halten der Hohlkörper (5) mit ihrer Mündung (5.1) an den beiden Bändern (6.1, 6.2) ausschließlich durch einen Unterdruck, wobei der Abstand zwischen den Bändern (6.1, 6.2) derart bestimmt ist, dass die Mündung (5.1) jedes zu prüfenden Hohlkörpers (5) teilweise an dem einen und teilweise an dem anderen der beiden Bänder anliegt,
- Einstellen einer Relativgeschwindigkeit (v₃₎ zwischen den beiden Bändern (6.1, 6.2) derart, dass die Hohlkörper (5) zusätzlich zu der translatorischen Bewegung (5.5) in Förderrichtung in eine kontinuierliche Drehbewegung (5.4) um deren Rotationsachse (5.8) versetzt werden und
- Führen der Hohlkörper (5) während des Überkopftransports entlang der Förderstrecke (F) mittels einer Seitenführung (10).

19. Verfahren nach Anspruch 18, **dadurch gekennzeichnet, dass** beide Bänder (6.1, 6.2) mit unterschiedlichen Geschwindigkeiten und/oder gegenläufige Richtungen bewegt werden.

20. Verfahren nach Anspruch 18 oder 19, **dadurch gekennzeichnet, dass** abhängig von dem Durchmesser der Mündung (5.1) jedes Hohlkörpers (5) der Abstand zwischen den beiden Bändern eingestellt wird.

21. Verfahren nach einem der Ansprüche 18 bis 20, **dadurch gekennzeichnet, dass** der Unterdruck in einem Spalt zwischen den beiden Bändern (6.1, 6.2) zur Wirkung gebracht wird.

22. Verfahren nach einem der Ansprüche 18 bis 21, **dadurch gekennzeichnet, dass** eingangs der Förderstrecke (F) die Hohlkörper (5) der zweispurigen Überkopffördereinrichtung (6) mit nach oben weisender Mündung (5.1) und senkrechter Rotationsachse (5.8) aufeinanderfolgend zugeführt werden.

23. Verfahren nach einem der Ansprüche 18 bis 22, **dadurch gekennzeichnet, dass** von der Prüfeinrichtung (7) als fehlerhaft erkannte Hohlkörper (5.2) ausgesondert werden.

## Claims

1. A device (1) for checking hollow bodies (5) which are rotationally symmetrical about an axis of rotation (5.8) and have a mouth (5.1) during the separate overhead transportation of the hollow bodies (5) in a conveying direction along a conveying path (F), comprising
- a testing device (7) for recording and processing images of the wall (5.3) of each hollow body (5),
- a two-track overhead conveying device (6) which comprises two belts (6.1, 6.2) running parallel to one another, wherein at least one of the two belts (6.1, 6.2) can be moved in the conveying direction by means of a drive,
- a negative pressure generating device (9) arranged along the conveying path (F) adapted to hold the hollow bodies (5) with their mouth (5.1) on the two belts (6.1, 6.2) exclusively due to the prevailing negative pressure, wherein the distance between the belts (6.1, 6.2) is determined in such a manner that the mouth of each of the hollow bodies to be tested rests partially against one and partially against the other of the two belts,
- a drive control (11) which is adapted to set a relative speed between the two belts (6.1, 6.2) in order to set the hollow bodies in a rotational motion (5.4) about the axis of rotation (5.8) thereof in addition to the translational motion (5.5) in the conveying direction and
- a side guide (10) which is arranged along one of the belts (6.1) in such a manner that each hollow body (5) touches the side guide (10) with its wall (5.3) during the overhead transport in the conveying direction.

2. The device according to Claim 1, **characterized in that** the surfaces of both belts (6.1, 6.2) lie in a transport plane (6.7).

3. The device according to Claim 2, **characterized in that** the two belts (6.1, 6.2) running parallel to one another have different velocity vectors v₁, v₂ in the conveying direction F and the side guide (10) is arranged along that one of the two belts (6.1) whose velocity vector v₂ in the conveying direction is smaller.

4. The device according to Claim 1, **characterized in that**
- one belt (6.2) is inclined with respect to the horizontal in the direction of that side edge of the belt (6.2) which directly adjoins one side edge of the other belt (6.1) and
- the side guide is arranged laterally on the other belt (6.1).

5. The device according to one of Claims 1 to 4, **characterized in that** both belts (6.1, 6.2) are driven.

6. The device according to one of Claims 1 to 5, **characterized in that** at least one of the two belts (6.1, 6.2) is a part of a belt conveyor (6.3).

7. The device according to one of Claims 1 to 6, **characterized in that** the surfaces of the belts (6.1, 6.2) consist of elastic material.

8. The device according to one of Claims 1 to 7, **characterized in that** the surfaces of the belts (6.1, 6.2) have different material properties.

9. The device according to one of Claims 1 to 8, **characterized in that** the distance between the two belts (6.1, 6.2) is adjustable.

10. The device according to one of Claims 1 to 9, **characterized in that** the negative pressure generating device (9) comprises a negative pressure channel (9.1) extending in the longitudinal direction (L) along the conveying path (F) and a vacuum pump (9.3) connected to the negative pressure channel (9.1) in a fluid-conducting manner.

11. The device according to Claim 10, **characterized in that** the negative pressure channel (9.1) is arranged in a gap between the two belts (6.1, 6.2).

12. The device according to Claim 10, **characterized in that** the negative pressure channel (9.1) is arranged on the rear side opposite the surface of the two belts (6.1, 6.2).

13. The device according to one of Claims 1 to 12, **characterized in that** the drive control (11) comprises a separate speed regulation for the drive of each driven belt (6.1, 6.2).

14. The device according to one of Claims 1 to 13, **characterized in that** a feed device (4) is arranged at the beginning of the conveying path (F) which is adapted for the successive feeding of the hollow bodies (5) to the conveying path (F) with upward-pointing mouth (5.1) and perpendicular axis of rotation (5.8).

15. The device according to one of Claims 1 to 14, **characterized by** a separating device (8) for separating out defective hollow bodies (5).

16. The device according to one of Claims 1 to 15, **characterized in that** the testing device (7) comprises a plurality of digital still cameras (7.1) which are aligned onto the hollow bodies (5) in the conveying path (F).

17. The device according to Claim 16, **characterized in that** the testing device (7) comprises an image processing unit (7.2) for processing the image data of each still camera (7.1).

18. A method for checking hollow bodies (5) which are rotationally symmetrical about an axis of rotation (5.8) and have a mouth (5.1) during the separate overhead transportation of the hollow bodies (5) along a conveying path (F), comprising a testing device (7) for recording and processing images of the wall (5.3) of each hollow body (5) and a two-track overhead conveying device (6) which comprises two belts (6.1, 6.2) running parallel to one another, wherein at least one of the two belts can be moved by means of a drive in the conveying direction, comprising the following steps
- recording images of the wall (5.3) of each hollow body (5) during the overhead transport,
- holding the hollow body (5) with its mouth (5.1) on the two belts (6.1, 6.2) exclusively by a negative pressure, wherein the distance between the belts (6.1, 6.2) is determined in such a manner that the mouth (5.1) of each of the hollow bodies (5) to be tested rests partially against one and partially against the other of the two belts,
- adjusting a relative speed (v₃) between the two belts (6.1, 6.2) in such a manner that the hollow bodies (5) are set in a continuous rotational motion (5.4) about the axis of rotation (5.8) thereof in the conveying direction in addition to the translational motion (5.5) and
- guiding the hollow bodies (5) during the overhead transport along the conveying path (F) by means of a side guide (10).

19. The method according to Claim 18, **characterized in that** both belts (6.1, 6.2) are moved at different speeds and/or in opposite directions.

20. The method according to Claim 18 or 19, **characterized in that** the distance between the two belts is adjusted depending on the diameter of the mouth (5.1) of each hollow body (5).

21. The method according to one of Claims 18 to 20, **characterized in that** the negative pressure is brought to bear in a gap between the two belts (6.1, 6.2).

22. The method according to one of Claims 18 to 21, **characterized in that** at the beginning of the conveying path (F) the hollow bodies (5) are successively supplied to the two-track overhead conveying device (6) with upward-pointing mouth (5.1) and perpendicular axis of rotation (5.8).

23. The method according to one of Claims 18 to 22, **characterized in that** hollow bodies (5.2) identified as defective are separated out by the testing device (7) .

## Revendications

1. Dispositif (1), destiné à vérifier des corps creux (5) symétriques en rotation autour d'un axe de rotation (5.8), dotés d'une embouchure (5.1) pendant le transport suspendu un à un des corps creux (5) dans un sens de convoyage le long d'un trajet de convoyage (F), comprenant
- un système de vérification (7), destiné à prendre et à traiter des clichés de la paroi (5.3) de chaque corps creux (5),
- un système de convoyage suspendu (6) à deux voies, qui comporte deux bandes (6.1, 6.2) s'écoulant à la parallèle l'une de l'autre, au moins l'une des deux bandes (6.1, 6.2) étant mobile au moyen d'un entraînement dans le sens de convoyage,
- un système générateur de dépression (9), placé le long du trajet de convoyage (F), aménagé pour maintenir les corps creux (5) par leur embouchure (5.1) sur les deux bandes (6.1, 6.2), exclusivement par la dépression régnante, l'écart entre les bandes (6.1, 6.2) étant déterminé de telle sorte que l'embouchure de chaque corps creux qui doit être vérifié soit partiellement adjacente à l'une et partiellement adjacente à l'autre des deux bandes,
- une commande d'entraînement (11), qui est aménagée pour régler une vitesse relative entre les deux bandes (6.1, 6.2), pour amener les corps creux en sus du mouvement de translation (5.5) dans le sens de convoyage dans un mouvement de rotation (5.4) autour de leur axe de rotation (5.8) et
- un guidage latéral (10), qui est placé le long d'une des deux bandes (6.1), de telle sorte que pendant le transport suspendu dans le sens de convoyage, chaque corps creux (5) touche par sa paroi (5.3) le guidage latéral (10).

2. Dispositif selon la revendication 1, **caractérisé en ce que** les surfaces des deux bandes (6.1, 6.2) se situent dans un plan de transport (6.7).

3. Dispositif selon la revendication 2, **caractérisé en ce que** les deux bandes (6.1, 6.2) s'écoulant à la parallèle l'une de l'autre présentent des vecteurs de vitesse v₁, v₂ de différentes valeurs dans le sens de convoyage F et le guidage latéral (10) est placé le long de celle des deux bandes (6.1) dont le vecteur de vitesse v₂ dans le sens de convoyage est moins important.

4. Dispositif selon la revendication 1, **caractérisé en ce**
- **qu'**une bande (6.2) est inclinée par rapport à l'horizontale dans la direction du bord latéral de la bande (6.2) qui jouxte directement un bord latéral de l'autre bande (6.1) et
- **que** le guidage latéral est placé latéralement sur l'autre bande (6.1).

5. Dispositif selon l'une quelconque des revendications 1 à 4, **caractérisé en ce que** les deux bandes (6.1, 6.2) sont entraînées.

6. Dispositif selon l'une quelconque des revendications 1 à 5, **caractérisé en ce qu'**au moins l'une des deux bandes (6.1, 6.2) est un élément constitutif d'un convoyeur à bandes (6.3).

7. Dispositif selon l'une quelconque des revendications 1 à 6, **caractérisé en ce que** les surfaces de deux bandes (6.1, 6.2) consistent dans une matière élastique.

8. Dispositif selon l'une quelconque des revendications 1 à 7, **caractérisé en ce que** les surfaces des bandes (6.1, 6.2) font preuve de différentes propriétés de matière.

9. Dispositif selon l'une quelconque des revendications 1 à 8, **caractérisé en ce que** l'écart entre les deux bandes (6.1, 6.2) est réglable.

10. Dispositif selon l'une quelconque des revendications 1 à 9, **caractérisé en ce que** le système générateur de dépression (9) comprend une canalisation de dépression (9.1) s'étendant dans la direction longitudinale (L) le long du trajet de convoyage (F), ainsi qu'une pompe à vide (9.3) qui est en liaison fluidique avec la canalisation de dépression (9.1).

11. Dispositif selon la revendication 10, **caractérisé en ce que** la canalisation de dépression (9.1) est placée dans une fente entre les deux bandes (6.1, 6.2).

12. Dispositif selon la revendication 10, **caractérisé en ce que** la canalisation de dépression (9.1) est placée sur la face arrière qui est opposée à la surface des deux bandes (6.1, 6.2).

13. Dispositif selon l'une quelconque des revendications 1 à 12, **caractérisé en ce que** la commande d'entraînement (11) comprend une régulation de vitesse séparée pour l'entraînement de chaque bande (6.1, 6.2) entraînée.

14. Dispositif selon l'une quelconque des revendications 1 à 13, **caractérisé en ce qu'**à l'entrée du trajet de convoyage (F) est placé un système d'amenage (4), qui est aménagé pour amener successivement les corps creux (5) vers le trajet de convoyage (F), avec l'embouchure (5.1) tournée vers le haut et l'axe de rotation (5.8) à la verticale.

15. Dispositif selon l'une quelconque des revendications 1 à 14, **caractérisé par** un système de sélection (8), destiné à éliminer les corps creux (5) défectueux.

16. Dispositif selon l'une quelconque des revendications 1 à 15, **caractérisé en ce que** le système de vérification (7) comporte plusieurs appareils de prises de vue fixes (7.1) numériques, qui sont orientés sur les corps creux (5) dans le trajet de convoyage (F).

17. Dispositif selon la revendication 16, **caractérisé en ce que** le système de vérification (7) comporte une unité de traitement d'images (7.2), destinée à traiter les données d'image de chaque appareil de prises de vues fixes (7.1).

18. Procédé, destiné à vérifier des corps creux (5) symétriques en rotation autour d'un axe de rotation (5.8), dotés d'une embouchure (5.1) pendant le transport suspendu un à un des corps creux (5) le long d'un trajet de convoyage (F), avec un système de vérification (7), destiné à prendre et à traiter des clichés de la paroi (5.3) de chaque corps creux (5) et un système de convoyage suspendu (6) à deux voies, qui comporte deux bandes (6.1, 6.2) s'étendant à la parallèle l'une de l'autre, au moins l'une des deux bandes étant mobile dans le sens de convoyage au moyen d'un entraînement, comprenant les étapes suivantes consistant à :
- prendre des clichés de la paroi (5.3) de chaque corps creux (5) pendant le transport suspendu,
- maintenir les corps creux (5) par leur embouchure (5.1) sur les deux bandes (6.1, 6.2), exclusivement par une dépression, l'écart entre les bandes (6.1, 6.2) étant déterminé de telle sorte que l'embouchure (5.1) de chaque corps creux (5) qui doit être vérifié soit partiellement adjacente à l'une et partiellement adjacente à l'autre des deux bandes,
- régler une vitesse relative (v₃) entre les deux bandes (6.1, 6.2), de telle sorte que les corps creux (5) soient amenés, en sus du mouvement de translation (5.5) dans le sens de convoyage dans un mouvement de rotation (5.4) continu autour de leur axe de rotation (5.8) et
- guider les corps creux (5) pendant le transport suspendu le long du trajet de convoyage (F) au moyen d'un guidage latéral (10).

19. Procédé selon la revendication 18, **caractérisé en ce que** les deux bandes (6.1, 6.2) sont déplacées à différentes vitesses et/ou dans des sens opposés.

20. Procédé selon la revendication 18 ou 19, **caractérisé en ce que** l'on règle l'écart entre les deux bandes en fonction du diamètre de l'embouchure (5.1) de chaque corps creux (5).

21. Procédé selon l'une quelconque des revendications 18 à 20, **caractérisé en ce que** l'on amène la dépression à agir dans une fente entre les deux bandes (6.1, 6.2).

22. Procédé selon l'une quelconque des revendications 18 à 21, **caractérisé en ce qu'**à l'entrée du trajet de convoyage, l'on amène les corps creux (5) successivement (F) vers le système de convoyage suspendu (6) à deux voies avec l'embouchure (5.1) tournée vers le haut et l'axe de rotation (5.8) à la verticale.

23. Procédé selon l'une quelconque des revendications 18 à 22, **caractérisé en ce que** l'on élimine les corps creux (5.2) reconnus défectueux par le système de vérification (7).
